# EUROPÄISCHE PATENTSCHRIFT

(11) **EP 1 848 783 B1**
(45) Veröffentlichungstag und Bekanntmachung des Hinweises auf die Patenterteilung: **27.04.2011**
(21) Anmeldenummer: 06706647.2
(22) Anmeldetag: 04.02.2006
(51) Int. Cl.: C09D 183/04

(54) **ANTIADHÄSIVE BESCHICHTUNG VON BAUTEILEN ZUR VERHINDERUNG VON ÖLKOHLEANBACKUNGEN**
COMPONENT ANTIADHESIVE COATING FOR PREVENTING CARBON BUILD-UP
REVETEMENT ANTI-ADHESIF D'ELEMENTS POUR PREVENIR LE CALAMINAGE

(30) Priorität: 15.02.2005 DE 102005006670
(43) Veröffentlichungstag der Anmeldung: 31.10.2007
(73) Patentinhaber: KS Kolbenschmidt GmbH, 74172 Neckarsulm (DE)
(72) Erfinder: BÜRKLE, Günter, 71726 Benningen (DE)
(74) Vertreter: Greif, Thomas
(86) Internationale Anmeldenummer: PCT/EP2006/000989
(87) Internationale Veröffentlichungsnummer: WO 2006/087113

(56) Entgegenhaltungen:
- WO-A-02/061173
- US-B1- 6 419 989
- US-B1- 6 630 244

## Beschreibung

Die Erfindung betrifft eine Verwendung einer Beschichtung für ein Bauteil, das mit kohlenstoffhaltigen Verbindungen in Berührung kommt, gemäß den Merkmalen des Oberbegriffes des Patentanspruchs 1.

Schädliche Anlagerungen an einem Bauteil, wie z. B. Ölkohle, bilden sich auf Bauteilen, die mit kohlenstoffhaltigen Verbindungen In Berührung kommen. Die sogenannte Ölköhle bildet sich bei Temperaturen etwa zwischen 180° C (darunter findet keine Verkokung statt) und etwa 380° C (über dieser Temperatur findet schon eine Verbrennung der Ölkolhle statt). Zur Ablagerung von Ölkohle, sogenannten Ölkohleanbackungen_{;} kommt es beispielsweise bei Kolben, Ventilen und dergleichen von Brennkraftmaschinen, bei denen ein kohlenstoffhalhtiges Kraftstoff-Luft-Gemisch im Verbrennungsraum, in dem der Kolben angeordnet ist, einer Brennkraftmaschine verbrannt wird. Aufgrund der dort herrschenden Temperaturen kommt es nicht zu der Verbrennung der Ölkohle, sondern zu der nachteiligen Ölkohleanbackung,

Aus dem Stand der Technik sind schon Maßnahmen bekannt, um zu versuchen, solche Ölkohleanbackungen an Bauteilen zu verhindern, die allesamt bisher unzufriedenstellend sind. Aus der EP 0 874 066 B1 ist eine silizlumhaltige amorphe hydrierte Kohlenstoffschicht bekannt, die durch eine Plasmaabscheidung hergestellt wird. Eine solche Plasmaabscheidung ist bei der Serienherstellung von Bauteilen aufwändig und kostenintensiv, wobei auch die beschriebene Kohlenstoffschicht nicht die gewünachten Eigenschaften hat. Aus der DE 100 04 132 A1 ist eine Beschichtungszusammensetzung zur Herstellung schrnutzabweisender Schichten bekannt, wobei die Problematik der Ölkohleanbackung hier nicht genannt ist. Die DE 101 19 352 A1 zeigt selbstreinigende Oberflächen durch hydrophobe Strukturen, genauso wie die DE 101 06 213 A1 selbetreinigende Lackbeschichtungen, und Verfahren und Mittel zur Herstellung derselben beschreiben, wobei auch hier nicht erwähnt ist, dass die Oberflächen mit kohlenstoffhaltigen Verbindungen in Berührung kommen.

Beschichtungen aus thermisch beständigem organisch-anorganischen Hybridpolymeren sind aus US 6,630.244 B1. WO 02/061173 A2 oder US 6,419,989 B1 bekannt.

Der Erfindung liegt daher die Aufgabe zugrunde, eine Beschichtung für ein Bauteil, das mit kohlenstoffhaltigen Verbindungen in Berührung kommt, zu schaffen, mit der die Ablagerung von Ölkohle wirksam verhindert wird.

Diese Aufgabe ist durch die Merkmal des Patentanspruchs 1 gelöst.

Erfindungsgemäß ist eine Verwendung einer Beschichtung aus einem thermisch beständigen organisch-anorganischen Hybridpolymer in Brennkraftmaschinen zur Verhinderung von Ölkohleanbackungen vorgesehen.

Eine solche Beschichtung kann beispielsweise in einem Sol-Gel-Verfahren hergestellt werden.

Das organisch-anorganischen Hybridpolymer wird durch einbrennbare Metall-Alkoxide und/oder polymerisierbare organometallische Verbindungen als Precursoren in organischen Lösungsmitteln gebildet.

Die Metalle können aus der Gruppe Si (Silicium), Ti (Titan), Zr (Zirkonium), Al (Aluminium), Sn (Zinn) oder Ce (Cer) sein, wobei die Aufstellung nicht vollständig ist. Diese Metalle werden im Verlauf des Einbrennens (Pyrolyse) bei Temperaturen insbesondere im Brennraum vollständig oder teilweise in Oxide umgewandelt und miteinander versintert, so dass die hochtemperaturfeste Schicht entsteht.

Die Beschichtung zeichnet sich durch eine hohe Haftfestigkeit an dem Bauteil und eine hohe thermische Beständigkeit aus. Die anorganisch-organischen Hybridpolymere, die selbst schlecht von Flüssigkeiten benetzbar und damit antiadhäsiv sind, können zum Beispiel durch Anlagerung perflorierter Gruppen gute antiadhäsive Eigenschaften besitzen, wie sie z. B. von dem Material. Teflon bekannt sind Allerdings hat Teflon den Nachteil, dass seine thermische Einsatzgrenze derzeit bei etwa 300° C liegt, wobei die erfindungsgemäßen organisch-anorganischen Hybridpolymere oberhalb dieser Grenze ohne weiteres einsetzbar sind.

Weiterhin kann die gewünschte antiadhäsive Eigenschaft durch eine Nanostrukturierung der Oberfläche und die Verwendung eines schlecht benetzbaren Materials erzielt werden, so dass sich der in der Fachwelt als "Lotus-Effekt" bekannte Wirkung ergibt.

In Weiterbildung der Erfindung sind der Beschichtung Farbpigmente beigemischt. Dabei versteht es sich von selbst, dass die beigemischten Farbpigmente ebenfalls hitzebeständig sind. So können zum Beispiel schwarze oder sonstige dunkle Pigmente zur Erhöhung der Strahlungsabsorbtion verwendet werden, woraus eine verbesserte Wärmeableitung resultiere.

In Weiterbildung der Erfindung sind der Beschichtung metallische Pigmente beigemischt. Solche metallischen Pigmente dienen der Erhöhung des Reflexionsgrades, was zu einer Verringerung der Bauteiltemperatur führt, woraus wiederum die wirksame Verhinderung der Heißgaskorrosion resultiert. Außerdem lassen sich auch durch die metallischen Pigmente die Wärmeausdehnungskoeffizienten des Bauteiles und der Beschichtung aneinander anpassen, so dass die thermischen Spannungen zwischen der Beschichtung und dem Bauteil abgebaut werden.

In Weiterbildung der Erfindung sind der Beschichtung keramische Nanopartikel beigemischt. Diese keramischen Nanopartikel erhöhen die Gleitfähigkeit der Beschichtung, so dass nicht nur Heißgaskorrosionen verhindert, sondern auch die Reibung der Beschichtung, herabgesetzt wird.

In einer weiteren Ausgestaltung der Erfindung können auch mehrere der vorgenannten Pigmentarten miteinander kombiniert werden.

Die erfindungsgemäße Beschichtung ist besonders vorteilhaft anwendbar bei Bauteilen von Brennkraftmaschinen, die mit den kohlenstoffhaltigen Verbindungen in Verbindung kommen.

So ist beispielsweise vorgesehen, dass eine Zündelektrode einer Zündkerze einer Brennkraftmaschine mit der erfihdungsgemäßen Beschichtung versehen ist. Dadurch kann der Teil der Zündkerze, insbesondere die Zündelektrode, frei von Ölkohleanbackungen gehalten werden, so dass die Bildung des Zündfunkens in keiner Weise beeinträchtigt oder verhindert wird.

Weiterhin kann auch ein Kolben bzw. ein Kolbenring einer Brennkraftmaschine mit der erfindungsgemäßen Beschichtung versehen werden. Gleiches gilt für Ein- oder Auslaßventile der Brennkraftmaschine. Kommt es bei diesen Bauteilen nämlich zur Ablagerung von Ölkohle, wirkt sich dies negativ auf den Verbrauch und den Schadstoffausstoß der Brennkraftmaschine aufgrund der Porösität der Ölkohle aus. Bei bewegten Teilen, wie Kolben, Kolbenringe, Ventile, kann die angebackene Ölkohle die Gleiteigenschaften verschlechtern und zum Fressen führen. Außerdem bewirkt die schwarze Ölkohle eine Erwärmung, insbesondere des Kolbens durch Strahlungswärme, woraus ebenfalls die negativen geschilderten Wirkungen resultieren. Und diese negativen Wirkungen werden eben durch die erfindungsgemäße Beschichtung beseitigt, so dass der Verbrauch und Schadstoffausstoß der Brennkraftmaschine gesenkt wird, was ansonsten nur durch eine Beimischung von Additiven zum Kraftstoff erzielbar wäre. Solche Additive sind aber teuer und stellen für den Benutzer eines Fahrzeuges, in dem eine Brennkraftmaschine eingebaut ist, eine zusätzliche Belastung dar.

## Patentansprüche

1. Verwendung einer Beschichtung aus einem thermisch beständigen organisch-anorganischen Hybridpolymer in Brennkraftmaschinen zur Verhinderung von Ölkohleanbackungen, wobei ein Bauteil der Brennkraftmaschine mit der Beschichtung versehen ist.

2. Verwendung einer Beschichtung nach Anspruch 1, **dadurch gekennzeichnet, dass** der Beschichtung metallische Pigmente beigernischt sind.

3. Verwendung einer Beschichtung nach Anspruch 1, **dadurch gekennzeichnet, dass** der Beschichtung passivierende Pigmente beigernischt sind.

4. Verwendung einer Beschichtung nach Anspruch 1, **dadurch gekennzeichnet, dass** der Beschichtung Farbpigmente beigernischt sind.

5. Verwendung einer Beachichtung nach Anspruch 1, **dadurch gekennzeichnet, dass** der Beschichtung keramische Nanopartikel beigernischt sind.

6. Verwendung einer Beschichtung nach einem der Anspruch 2, 3, 4 oder 5, **dadurch gekennzeichnet, dass** die Beachichtung zumindest zwei der Pigmentartsn beigamischt sind.

7. Verwendung einer Beschichtung gemäß einem der Ansprüche 1 bis 6, **dadurch gekennzeichnet, dass** das Bauteil ein Einlaß- oder Auslaßventil einer Brennkraftmaschine ist.

8. Verwendung einer Beschichtung gemäß einem der Ansprüche 1 bis 6, **dadurch gekennzeichnet, dass** das Bauteil eine Zündelektrode einer Zündkerze einer Brennkraftmaschine ist.

9. Verwendung einer Beschichtung gemäß einem der Ansprüche 1 bis 6, **dadurch gekennzeichnet, dass** das Bauteil ein Kolben oder ein Kolbenring einer Brennkraftmaschine ist.

## Claims

1. Use of a coating made of a heat-resistant organic/inorganic hybrid polymer in internal combustion engines for preventing the build-up of carbon, wherein a component of the internal combustion engine is provided with the coating.

2. Use of a coating according to Claim 1, **characterized in that** metallic pigments are admixed with the coating.

3. Use of a coating according to Claim 1, **characterized in that** passivating pigments are admixed with the coating.

4. Use of a coating according to Claim 1, **characterized in that** coloured pigments are admixed with the coating.

5. Use of a coating according to Claim 1, **characterized in that** ceramic nanoparticles are admixed with the coating.

6. Use of a coating according to one of Claims 2, 3, 4 and 5, **characterized in that** at least two of the types of pigments are admixed with the coating.

7. Use of a coating according to one of Claims 1 to 6, **characterized in that** the component is an inlet or outlet valve of an internal combustion engine.

8. Use of a coating according to one of Claims 1 to 6, **characterized in that** the component is an ignition electrode of a spark plug of an internal combustion engine.

9. Use of a coating according to one of Claims 1 to 6, **characterized in that** the component is a piston or a piston ring of an internal combustion engine.

## Revendications

1. Utilisation d'un revêtement en un polymère hybride organique-inorganique thermorésistant dans des machines à énergie thermique pour empêcher des collages d'hydrocarbures, une pièce de la machine à énergie thermique étant pourvue du revêtement.

2. Utilisation d'un revêtement selon la revendication 1, **caractérisée en ce que** des pigments métalliques sont mélangés dans le revêtement.

3. Utilisation d'un revêtement selon la revendication 1, **caractérisée en ce que** des pigments de passivation sont mélangés dans le revêtement.

4. Utilisation d'un revêtement selon la revendication 1, **caractérisée en ce que** des pigments colorés sont mélangés dans le revêtement.

5. Utilisation d'un revêtement selon la revendication 1, **caractérisée en ce que** des nanoparticules céramiques sont mélangées dans le revêtement.

6. Utilisation d'un revêtement selon l'une quelconque des revendications 2, 3, 4 ou 5, **caractérisée en ce qu'**au moins deux des types de pigments sont mélangés dans le revêtement.

7. Utilisation d'un revêtement selon l'une quelconque des revendications 1 à 6, **caractérisée en ce que** la pièce est une soupape d'admission ou d'échappement d'une machine à énergie thermique.

8. Utilisation d'un revêtement selon l'une quelconque des revendications 1 à 6, **caractérisée en ce que** la pièce est une électrode d'allumage d'une bougie d'une machine à énergie thermique.

9. Utilisation d'un revêtement selon l'une quelconque des revendications 1 à 6, **caractérisée en ce que** la pièce est un piston ou un segment de piston d'une machine à énergie thermique.
